# EUROPEAN PATENT SPECIFICATION

(11) **EP 0 532 681 B1**
(45) Date of publication and mention of the grant of the patent: **28.09.1994**
(21) Application number: 91912589.8
(22) Date of filing: 06.06.1991
(51) Int. Cl.: F28D 20/00

(54) **VAPORISER/CONDENSER INSTALLATION AND ENERGY SYSTEM PROVIDED WITH SUCH AN INSTALLATION**
VERDAMPFUNGS-/KONDENSATIONSANLAGE UND MIT EINER SOLCHEN ANLAGE VERSEHENEM ENERGIESYSTEM
ENSEMBLE EVAPORATEUR-CONDENSEUR ET SYSTEME ENERGETIQUE MUNI DE CELUI-CI

(30) Priority: 06.06.1990 NL 9001290
(43) Date of publication of application: 24.03.1993
(73) Proprietor: DE BEIJER RAADGEVEND TECHNISCH BUREAU B.V., 6841 HA Arnhem (NL)
(72) Inventor: DE BEIJER, Hendrikus, Antonius, NL-6851 CM Huissen (NL); KLEIN HORSMAN, Jan, Willem, NL-6835 BV Arnhem (NL)
(74) Representative: de Bruijn, Leendert C.
(86) International application number: NL9100094
(87) International publication number: WO9119155

(56) References cited:
- WO-A-89/00271
- WO-A-90/01660
- DE-A- 2 622 699
- DE-A- 3 212 609

## Description

The invention relates to an installation for vaporisation or condensation of a liquid or vapour respectively, provided with a holder for the liquid with means for supplying or removing heat, which holder is provided with a capillary structure which extends above and below the liquid level.

Such an installation is known from WO-A-89/00271. It has the disadvantage that the height of the gauze available for condensation or vapourization of the liquid varies largely. This means that, once condensation has taken place, the gauze is immersed in the liquid. Thereby, the surface of the gauze above the liquid level, available for condensation or evaporation, is too limited.

The aim of the invention is to provide an installation of the type described above which guarantees a proper condensation or evaporation at all stage. This is achieved in that a reservoir is provided for receiving some of the liquid which reservoir at its lower part is in liquid connection with the holder and at is higher part has a closed head space free of liquid.

This reservoir collects the sorbate during condensation and, conversely, also ensures that liquid is always supplied to the vaporiser during vaporisation.

In order to ensure good functioning, the lowest point of the reservoir must be not higher than the lowest point of the holder. The lowest points of the holder and the reservoir are connected via a line. Additionally, the holder and reservoir can also be connected at the top via a line.

A vaporiser/condenser installation as described above has the advantage that it can have relatively small internal dimensions for a relatively large internal vaporisation surface.

According to a preferred embodiment of the invention, the installation is provided with a heat accumulator containing a heat-transporting substance which can be either in the liquid phase or in the vapour phase, and containing a crystalline material which exothermally absorbs and endothermally desorbs the heat-transporting substance. Installations of this type must first be charged by supplying heat to the accumulator and by cooling the vaporiser/condenser installation at the same time. When the installation is completely or partially charged, the process can be reversed, for example by cooling the accumulator, as a result of which cooling occurs at the vaporiser/condenser installation.

Installation systems of this type are also known. However, they have a number of less favourable characteristics which in part result from the disadvantages already described above with regard to the vaporiser/condenser installations which are used in these energy systems.

In this respect also, the invention offers an improvement to this existing situation in that the holder is connected via a closable line to the heat accumulator.

According to an advantageous embodiment provision is made in this installation for the heat accumulator and the holder to have a common gastight housing, the lower section of the housing being the holder and the upper section of the housing being the container for crystalline material. With a design of this type it can be reliably ensured that a specific atmosphere is maintained in the interior of the installation. This is important for good functioning of the installation, since gases penetrating from the outside, such as ambient air, could disturb the processes occuring in the installation.

There is preferably a connecting piece of thermally insulating material between the hot and the cold section. By this means the temperature differences which arise between the vaporiser/condenser and the heat accumulator during use of the installation can be better maintained.

According to a simple embodiment, the housing is pipe-shaped. A compact design of the installation possesses a housing which is provided on the inside with a partition adjoining the housing at the top and having a hole which connects to one end of a line which at the other end is connected to the space between line and housing, in which space the crystalline material is located.

The other end of the line is provided with a valve, which can be operated via a magnet located outside the housing. There is now no need to make through-bores in the housing for operation of the valve, so that the gastightness of the housing is ensured in this case also.

According to a second embodiment, the heat accumulator is located in a separate gastight housing which is connected via a vapour line to the top of the container. The form in which the housing is pipe-shaped has, on the inside, a concentric tube which opens into the exterior, an annular space also being present between the tubes to receive the crystalline material and, finally, the outer tube being provided on the outside and the inner tube being provide on the inside with heat exchangers, has the advantage that an appreciable heat exchange capacity is obtained.

According to a third design variant, the heat accumulator is connected via a second vapour line to a separate condenser, which seperate condenser is connected by means of a liquid line to the holder or the reservoir. The vapour escaping from the heat accumulator during charging of the system is transferred via the second vapour line to the condenser, where it condenses. The liquid is fed from the condenser to the vaporiser/condenser. In order to be able to alternately charge and discharge the installation, each vapour line is connected by its own valve to the heat accumulator. When charging the system the valve in the vapour line for the condenser is open and that for the vaporiser/condenser is closed, and vice versa when discharging the installation.

If each valve is a spring-loaded valve, the direction of the spring loading of which being counter to the vapour flow direction, the opening and closing of the valves can be controlled entirely automatically as a function of the pressures generated in the system.

In a fourth embodiment there are two heat accumulators which are connected in parallel to two vapour lines, one of which is connected to the condenser and the other to the vaporiser/condenser. If, with this arrangement, the heat exchangers interacting with the heat accumulators can be operated coupled together, so that alternately one heat accumulator is cooled and the other is heated, a continuous operation of the vaporiser/condenser can be obtained. In this case this installation can provide continuous cooling.

Some embodiments of the invention will be explained below, with reference to the drawing.

Figure 1 shows one embodiment of an installation according to the invention.

Figure 2 shows a second embodiment.

Figure 3 shows a third embodiment.

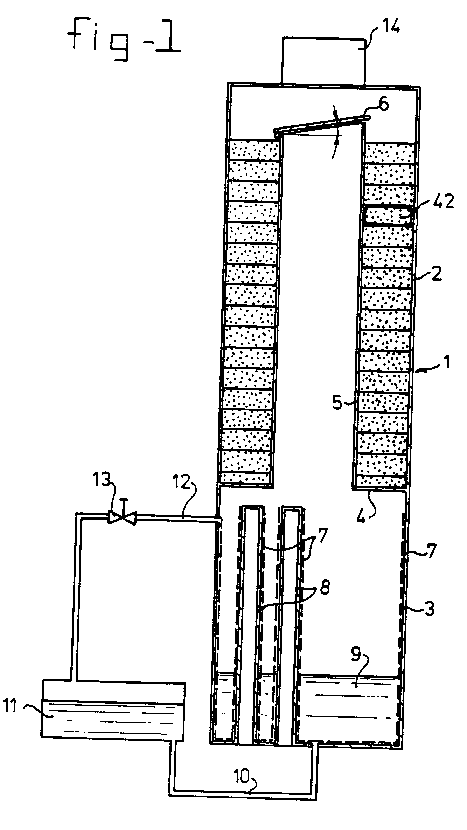

The installation shown in figure 1 has a pipe-shaped housing 1, containing a container 2 for crystalline material (heat accumulator) and a vaporiser/condenser containing a holder 3. Container 2 and holder 3 are separated from one another by a partition 4, to which a line 5 is connected. Via valve 6, the line 5 offers a connection between container 2 and holder 3. Both container 2 and holder 3 are provided with known heat exchangers (not shown).

Holder 3 is provided on the inside with a capillary structure in the form of a gauze 7, fitted on the inner wall of holder 3. Holder 3 can also be provided with support elements 8, which are also covered with gauze 7. The gauze 7 extends above and below the liquid level 9. The holder can, for example, have a diameter of 150 mm and a height of 500 mm.

Holder 3 is connected via line 10 to a reservoir 11, in which liquid can also be present. By means of this reservoir 11, the fluctuations in the height of the liquid level 9 can be kept under control when operating the installation. This means that a significant portion of the gauze can always be kept above the water level, which is advantageous if the vaporisation and condensation are to proceed smoothly. In order to restrict the fluctuations in height even in the case of a relatively large amount of liquid, the cross-section of the reservoir parallel to the horizontal is chosen to be as large as possible. The reservoir can, for example, be constructed as a horizontal copper tube having a diameter of 100 mm and a length of 400 mm.

By means of line 12 with valve 13, the tops of holder 3 and reservoir 11 can be connected to one another. In the charged state of the system, the reservoir can contain a large proportion of the sorbate, for example 20 to 80 %.

Valve 6 can be operated by means of a magnet 14, which is located outside the housing 1. Thus, the gas-tightness of the housing 1 can be maintained. Valve 6 can optionally be positioned at an angle, in order to promote the opening by means of the magnet.

A coil 42 is located in the annular space an spirally extends between both pipes. Thus, an efficient heat transfer between the annular space and the exterior can be ensured.

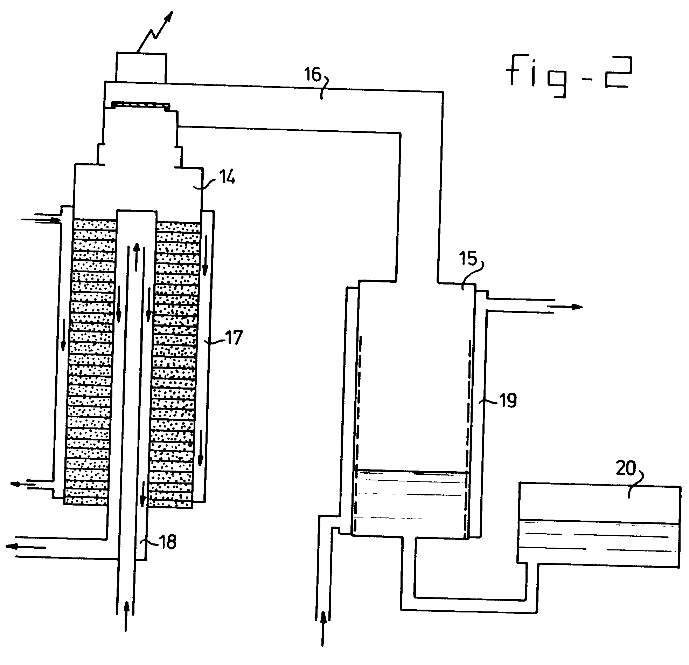

In the alternative embodiment shown in figure 2 the container 14 of the heat accumulator and the holder 15 of the vaporiser/condenser are placed alongside one another and connected by a line 16. It is true that this design is less compact, but it does have the advantage that a more intense heat exchange can be obtained with the heat accumulator. This is achieved in that a heat exchanger 17 and 18 respectively can be fitted both on the outside and on the inside of the container 14. The holder 15 is also provided with a heat exchanger 19, while it is also connected to the reservoir 20 already described.

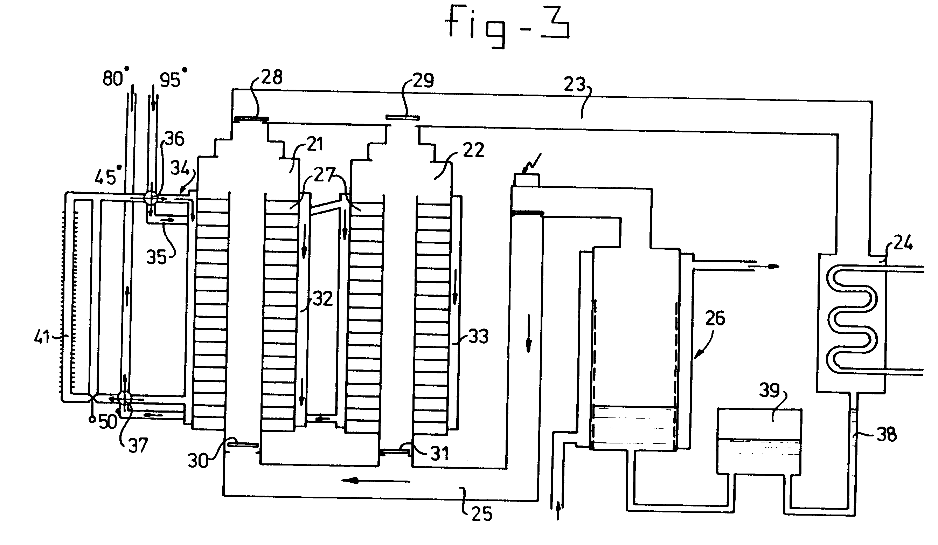

The third embodiment shown in figure 3 shows an installation in which two heat accumulators according to the invention, 21 and 22, are used. The heat accumulators 21 and 22 are connected in parallel. Via vapour line 23 they are both connected to a condenser 24. Via a vapour line 25 they are connected to a vaporiser 26. Each heat accumulator is provided with a crystalline material 27, while the lines 23, 25 are connected by means of spring-loaded valves 28, 29 and 30, 31 respectively to the space in which the crystalline material 27 is present.

The heat accumulators 21, 22 are both provided with heat exchangers 32, 33 having a pipe system 34 and 35 respectively. The two pipe systems 34, 35 can be connected to one another by means of four-way valves 36, 37.

In the situation shown in figure 3, the heat accumulator 22 is heated, that is to say it is charged, while the heat accumulator 21 is cooled, that is to say the latter is discharged. The heat liberated during cooling of heat accumulator 21 is released by a heat exchanger 41. Heat accumulator 22 is heated from an external source by a liquid having a temperature of 95°C. The vapour liberated during charging of heat accumulator 22 leads to an increase in pressure in the space in which the crystalline material is present, as a result of which valve 31 is pressed closed and valve 29 is pressed open. The vapour then flows through the vapour line 23 to condenser 24, where it condenses. The condensate 38 then flows to the reservoir 39, which, in turn, is again connected to the vaporiser/condenser 26. The liquid is vaporised again and the vapour is fed via line 25 to the heat accumulator 21. As a result of vaporisation in the vaporiser/condenser 26 it is ensured that a specific pressure always prevails in line 25. In combination with the vacuum generated in heat accumulator 21 as a consequence of a discharging thereof, the vapour being absorbed in the crystalline material and a reduction in pressure occuring in the space in which said material is present, valve 30 is pressed open. By this means fresh vapour can always enter into the heat accumulator 21. This continues until the heat accumulator 21 has been discharged.

The heat accumulator 21 is more or less discharged at approximately the same time as the heat accumulator 22 is charged. This means that no further vapour can be absorbed in the crystalline material in the heat accumulator 21, so that the pressure in this space becomes equal to that in line 25. The spring valve 30 then closes and the spring valve 28 opens as a result of the increased pressure in the space in the heat accumulator 21 and the relatively low pressure in the vapour line 23 as a consequence of the condensation in condenser 24. During this operation the four-way valves 36, 37 are switched over, so that heat accumulator 22 is now cooled and the heat accumulator 21 is heated. During this entire process alternate heating and cooling of the heat accumulators thus occurs, while a continuous flow of vapour through the lines 23, 25 takes place. Furthermore, condensation takes place continuously in the condenser 24, while vaporisation occurs continuously in the vaporiser/condenser 26.

## Claims

1. Installation for vaporisation or condensation of a liquid or vapour respectively, provided with a holder (3) for the liquid with means (7, 8, 17, 18, 42) for supplying or removing heat, which holder (3) is provided with a capillary structure (8) which extends above and below the liquid level, characterised in that a reservoir (11) is provided for receiving some of the liquid, which reservoir (11) at its lower part is in liquid connection (10) with the holder (3) and at is higher part has a closed head space free of liquid.

2. Installation according to claim 1, in which the lowest point of the reservoir (11) is not higher than the lowest point of the holder (3).

3. Installation according to claim 1 or 2, in which the lowest point of holder (3) and reservoir (11) are connected via a liquid line (10).

4. Installation according to claim 1, 2 of 3, in which the top of reservoir (11) and holder (3) are connected via a vapour line (12).

5. Installation according to claim 4, in which the vapour line (12) is closable (13).

6. Installation according to one of the preceding claims, provided with a heat accumulator (2) containing a heat transporting substance which can be either in the liquid phase or in the vapour phase, and containing a crystalline material which exothermally absorbs and endothermally desorbs the heat-transporting substance, which heat accumulator (2) has means for the supply or removal of heat, whereby the holder (3) is connected via a closable vapour line (5) to the heat accumulator (2).

7. Installation according to claim 6, in which heat accumulator (2) and the holder (3) have a common gastight housing (1), the lower section of the housing (1) being the holder (3) and the upper section of the housing (1) being the container (2) for the crystalline material.

8. Installation according to claim 7, in which holder (3) and container (2) are connected to one another via a connecting piece of thermally insulated material.

9. Installation according to claim 7 or 8, in which the housing (1) has on the inside a partition (4) adjoining the top of the holder (3), provided with a hole to which one end of a tube (5) is connected, which at the other end is connected to the space between tube (5) and housing (1), in which space the crystalline material is present.

10. Installation according to claim 9, in which tube (5) and housing (1) consist of concentric pipes which delimit an annular space.

11. Installation according to claim 10, in which the other end of the tube (5) is provided with a valve (6) which can be operated via a magnet located outside the housing (1).

12. Installation according to claim 6, in which the heat accumulator is located in a separate gastight housing which is connected via a vapour line to the top of the holder.

13. Installation according to claim 12, in which the housing (14) is pipe-shaped and on the inside has a concentric pipe which opens into the exterior, between which pipes there is an annular space for receiving the cristalline material, the outer pipe being provided on the outside and the inner pipe on the inside with heat exchangers (17, 18).

14. Installation according to claim 12, in which the heat accumulator is connected via a second vapour line (25) to a separate condenser (26), which separate condenser (20) is connected by means of a liquid line to the holder or the reservoir (39).

15. Installation according to claim 14, in which each of the two vapour lines (23, 25) is connected by its own valve (28-31) to the heat accumulator (21, 22).

16. Installation according to claim 15, in which each valve (28-31) is a spring-loaded valve, the direction of the spring loading being counter to the vapour flow direction.

17. Installation according to claim 16, in which two heat accumulators (21, 22) are provided, connected in parallel, with two vapour lines (23, 25), one (23) of which is connected to the condenser (24) and the other (25) to the vaporiser/condenser installations (26).

18. Installation according to claim 17, in which the heat exchangers (32, 33) interacting with the heat accumulators can be operated coupled together, so that, alternately, one heat accumulator is always cold and the other is heated.

## Patentansprüche

1. Anlage zum Verdampfen oder Kondensieren einer Flüssigkeit oder eines Dampfes jeweils, welche mit einem Träger (3) für die Flüssigkeit mit einer Einrichtung (7, 8, 17, 18, 42) zum Zuführen oder Abführen von Wärme versehen ist, wobei der Träger (3) eine Kapillarstruktur (8) aufweist, welche sich über und unter den Flüssigkeitsspiegel erstreckt, **dadurch gekennzeichnet,** daß ein Speicherbehälter (11) zur Aufnahme einer Flüssigkeitsmenge vorgesehen ist, welcher Speicherbehälter (11) an seinem unteren Teil in Flüssigkeitsverbindung (10) mit dem Träger (3) ist und an seinem höheren Teil einen geschlossenen Kopfraum hat, welcher frei von Flüssigkeit ist.

2. Anlage nach Anspruch 1, bei der der tiefste Punkt des Speicherbehälters (11) nicht höher als der tiefste Punkt des Trägers (3) liegt.

3. Anlage nach Anspruch 1 oder 2, bei der der tiefste Punkt des Trägers (3) und der Speicherbehälter (11) über eine Flüssigkeitsleitung (10) verbunden sind.

4. Anlage nach Anspruch 1, 2 oder 3, bei der das Oberteil des Speicherbehälters (11) und des Trägers (3) über eine Dampfleitung (12) verbunden sind.

5. Anlage nach Anspruch 4, bei der die Dampfleitung (12) verschließbar (13) ist.

6. Anlage nach einem der vorangehenden Ansprüche, welche mit einem Wärmespeicher (2) versehen ist, welcher eine Wärmeträgersubstanz enthält, welche entweder in flüssiger Phase oder in Dampfphase vorliegen kann, und der ein kristallines Material enthält, welches die Wärmeträgersubstanz exotherm absorbiert und endotherm desorbiert, und bei der der Wärmespeicher (2) eine Einrichtung zum Zuführen oder Abführen von Wärme hat, und wobei der Träger (3) über eine verschließbare Dampfleitung (5) mit dem Wärmespeicher (2) verbunden ist.

7. Anlage nach Anspruch 6, bei der der Wärmespeicher (2) und der Träger (3) ein gemeinsames, gasdichtes Gehäuse (1) haben, das untere Teil des Gehäuses (1) der Träger (3) ist und das obere Teil des Gehäuses (1) der Behälter (2) für das kristalline Material ist.

8. Anlage nach Anspruch 7, bei der der Träger (3) und der Behälter (2) miteinander über ein Verbindungsstück aus wärme-isolierendem Material verbunden sind.

9. Anlage nach Anspruch 7 oder 8, bei der das Gehäuse (1) auf der Innenseite eine Trennwand (4) hat, welche an das Oberteil des Trägers (3) angrenzt, und welche mit einer Öffnung versehen ist, mit der ein Ende eines Rohrs (5) verbunden ist, deren anderes Ende mit dem Raum zwischen dem Rohr (5) und dem Gehäuse (1) verbunden ist, wobei in diesem Raum das kristalline Material vorhanden ist.

10. Anlage nach Anspruch 9, bei der das Rohr (5) und das Gehäuse (1) von konzentrischen Rohren gebildet werden, welche einen Ringraum begrenzen.

11. Anlage nach Anspruch 10, bei der das andere Ende des Rohrs (5) mit einem Ventil (6) versehen ist, welches über einen Magneten betreibbar ist, welcher außerhalb des Gehäuses (1) liegt.

12. Anlage nach Anspruch 6, bei der der Wärmespeicher in einem gesonderten, gasdichten Gehäuse liegt, welches über eine Dampfleitung mit dem Oberteil des Trägers (3) verbunden ist.

13. Anlage nach Anspruch 12, bei der das Gehäuse (14) rohrförmig ausgebildet ist und auf der Innenseite ein konzentrisches Rohr hat, welches sich nach außen hin öffnet, wobei zwischen den Rohren ein Ringraum zur Aufnahme des kristallinen Materials vorhanden ist, und das äußere Rohr auf der Außenseite und das innere Rohr auf der Innenseite mit Wärmeübertragern (17, 18) versehen sind.

14. Anlage nach Anspruch 12, bei der der Wärmespeicher über eine zweite Dampfleitung (25) mit einem gesonderten Kondensator (26) verbunden ist, wobei der gesonderte Kondensator (20) mit Hilfe einer Flüssigkeitsleitung mit dem Träger oder dem Speicherbehälter (39) verbunden ist.

15. Anlage nach Anspruch 14, bei der jede der beiden Dampfleitungen (23, 25) über ein eigenes Ventil (28-31) mit dem Wärmespeicher (21, 22) verbunden ist.

16. Anlage nach Anspruch 15, bei der jedes Ventil (28-31) ein federbelastetes Ventil ist, wobei die Federbelastungsrichtung entgegengesetzt zu der Dampfströmungsrichtung gerichtet ist.

17. Anlage nach Anspruch 16, bei der zwei Wärmespeicher (21, 22) vorgesehen sind, welche parallel geschaltet sind, und bei der zwei Dampfleitungen (23, 25) vorgesehen sind, wobei eine (23) mit dem Kondensator (24) und die andere (25) mit den Verdampfungs/Kondensatoranlagen (26) verbunden ist.

18. Anlage nach Anspruch 17, bei der die Wärmeübertrager (32, 33), welche mit den Wärmespeichern zusammenarbeiten, gekoppelt miteinander derart betreibbar sind, daß abwechselnd ein Wärmespeicher immer kalt und der andere immer warm ist.

## Revendications

1. Installation pour la vaporisation ou la condensation de, respectivement, un liquide ou une vapeur, munie d'un récipient de retenue (3) pour le liquide avec des moyens (7, 8, 17, 18, 42) pour apporter ou extraire de la chaleur, lequel récipient de retenue (3) est muni d'une structure capillaire (8) qui s'étend au-dessus et en-dessous du niveau du liquide, caractérisée en ce qu'un réservoir (11) est prévu pour recevoir une partie du liquide, lequel réservoir (11) est, au niveau de sa partie inférieure, en communication (10) assurant le passage du liquide avec le récipient de retenue (3) et présente, au niveau de sa partie supérieure, un espace libre fermé, exempt de liquide.

2. Installation selon la revendication 1, dans laquelle le point le plus bas du réservoir (11) n'est pas plus haut que le point le plus bas du récipient de retenue (3).

3. Installation selon la revendication 1 ou 2, dans laquelle les points les plus bas du réservoir (11) et du récipient de retenue (3) sont raccordés par une conduite à liquide (10).

4. Installation selon la revendication 1, 2 ou 3, dans laquelle les sommets du réservoir (11) et du récipient de retenue (3) sont raccordés par une conduite à vapeur (12).

5. Installation selon la revendication 4, dans laquelle la conduite à vapeur (12) est fermable (13).

6. Installation selon l'une quelconque des précédentes revendications, munie d'un accumulateur de chaleur (2) contenant une substance caloporteuse qui peut être soit en phase liquide soit en phase vapeur, et contenant un matériau cristallin qui absorbe exothermiquement et désorbe endothermiquement ladite substance caloporteuse, lequel accumulateur de chaleur (2) comprend un moyen pour apporter ou extraire de la chaleur, ce qui fait que le récipient de retenue (3) est raccordé à l'accumulateur de chaleur (2) par l'intermédiaire d'une conduite à vapeur (5) fennable.

7. Installation selon la revendication 6, dans laquelle l'accumulateur de chaleur (2) et le récipient de retenue (3) ont une enceinte commune (1) étanche aux gaz, la partie inférieure de l'enceinte (1) constituant le récipient de retenue (3) et la partie supérieure de l'enceinte (1) constituant le conteneur (2) du matériau cristallin.

8. Installation selon la revendication 7, dans laquelle le récipient de retenue (3) et le conteneur (2) sont raccordés l'un à l'autre par l'intermédiaire d'une pièce de raccord en matériau isolant du point de vue thermique.

9. Installation selon la revendication 7 ou 8, dans laquelle l'enceinte (1) comporte à l'intérieur une cloison de séparation (4) qui rejoint le haut du récipient de retenue (3), munie d'un trou auquel est raccordée une extrémité d'un tube (5) qui est raccordé, en l'autre extrémité, à un espace compris entre le tube (5) et l'enceinte (1), espace dans lequel se trouve ledit matériau cristallin.

10. Installation selon la revendication 9, dans laquelle le tube (5) et l'enceinte (1) sont faits de tuyaux concentriques qui délimitent un espace annulaire.

11. Installation selon la revendication 10, dans laquelle l'autre extrémité du tube (5) est munie d'un clapet (6) qui peut être actionné à l'aide d'un aimant placé à l'extérieur de l'enceinte (1).

12. Installation selon la revendication 6, dans laquelle l'accumulateur de chaleur est placé dans une enceinte séparée, étanche aux gaz, qui est raccordée par l'intermédiaire d'une conduite à vapeur au sommet du récipient de retenue.

13. Installation selon la revendication 12, dans laquelle l'enceinte (14) a la forme d'un tube et comporte à l'intérieur un tube concentrique qui s'ouvre sur l'extérieur, tubes entre lesquels se trouve un espace annulaire destiné à recevoir le matériau cristallin, le tube extérieur étant pourvu, sur l'extérieur, et le tube intérieur étant pourvu, sur l'intérieur, d'échangeurs de chaleur (17, 18).

14. Installation selon la revendication 12, dans laquelle l'accumulateur de chaleur est raccordé, par une seconde conduite à vapeur (25), à un condenseur séparé (26), lequel condenseur séparé (26) est raccordé au moyen d'une conduite à liquide au récipient de retenue ou au réservoir (39).

15. Installation selon la revendication 14, dans laquelle chacune des deux conduites à vapeur (23, 25) est raccordée par son propre clapet (28-31) à l'accumulateur de chaleur (21, 22).

16. Installation selon la revendication 15, dans laquelle chaque clapet (28-31) est un clapet taré par ressort, le sens de l'action du ressort étant opposé au sens d'écoulement de la vapeur.

17. Installation selon la revendication 16, dans laquelle il y a deux accumulateurs de chaleur (21, 22), branchés en parallèle, avec deux conduites à vapeur (23, 25) dont l'une (23) est raccordée au condenseur (24) et l'autre (25) aux installations (26) de vaporisation/condensation.

18. Installation selon la revendication 17, dans laquelle les échangeurs de chaleur (32, 33) qui interagissent avec les accumulateurs de chaleur peuvent être actionnés en étant couplés ensemble de sorte que, alternativement, un accumulateur est toujours froid et l'autre est chaud.
